# EUROPEAN PATENT SPECIFICATION

(11) **EP 4 079 404 B1**
(45) Date of publication and mention of the grant of the patent: **13.09.2023**
(21) Application number: 22165928.7
(22) Date of filing: 31.03.2022
(51) Int. Cl.: B01L 3/00, G01N 15/00, C12M 3/00

(54) **BIOLOGICAL PARTICLE DETECTING SYSTEM AND DETECTING METHOD THEREOF**
SYSTEM ZUR DETEKTION BIOLOGISCHER PARTIKEL UND DETEKTIONSVERFAHREN DAFÜR
SYSTÈME DE DÉTECTION DE PARTICULES BIOLOGIQUES ET SON PROCÉDÉ DE DÉTECTION

(30) Priority: 15.04.2021 CN 202110403998
(43) Date of publication of application: 26.10.2022
(73) Proprietor: LiqBio biomedical company limited, New Taipei City 244, Taiwan (TW)
(72) Inventor: OH YANG, Chi-Kun, Taoyuan City 333 (TW); CHIU, Tzu-Keng, New Taipei City 242 (TW); ZHU, Yu-Xian, Zhudong Township, Hsinchu County 310 (TW); YANG, Cheng-Fang, New Taipei City 238 (TW)
(74) Representative: Viering, Jentschura & Partner mbB Patent- und Rechtsanwälte

(56) References cited:
- WO-A1-2020/213674
- US-A1- 2020 376 488

## Description

### BACKGROUND OF THE INVENTION

### Technical Field

The present invention relates generally to a biochemical detecting system, and more particularly to a system and a method for detecting biological particles.

### Description of Related Art

A conventional biochemical detecting method is done manually. The sample has to be processed by a fluorescent staining procedure and an immunoprecipitation procedure for detection. However, the conventional biochemical detecting method is limited by a lot of factors, such as tools used by an operator and skills of the operator, so that the conventional biochemical detecting method is required for relatively great amount of specimen (such as the amount of blood, body fluid, hairs, nails, and so on). Thus, a microdetection is hard to be done by manually.

Additionally, during the conventional biochemical detecting method, several individual apparatuses are utilized to perform detections from a low accuracy one to a high accuracy one. Generally, the sample will be screened first to select a small amount of sample and transfer the selected sample to another apparatus to perform a high-accuracy detection. The process of detection cost several minutes to hours. During a manual operation and transference, the sample is probably deteriorated and contaminated Furthermore, to select and separate the useful sample from a great amount of the specimens is time-consuming. So far, there is no technique or method can locate, recognize, and capture a single specific biological particle without pre-processing the specimens.

Therefore, to overcome the above-mentioned problems, a novel system for detecting biological particles and a method thereof are needed.

US 2020/376488 A1 discloses a system for detecting and collecting a target particle according to the state of the art.

### BRIEF SUMMARY OF THE INVENTION

In view of the above, the primary objective of the present invention is to provide a system for detecting biological particles and a method thereof. By using the system, a portion of an entire sample that probably has target biological particles could be quickly detected and separated, and the portion of the sample is detected more carefully to precisely capture the target biological particles therein. The method avoids spending a lot of time on carefully detection to all the sample and consuming the sample during a preparation procedure. By selecting a portion of the sample that probably has the target biological particles from the entire sample, the efficiency of the detection is enhanced. Thus, in the present invention, any single target biological particle in a great amount of sample could be efficiently located, recognized, and captured, and the deterioration and the contamination during switch and transfer the detecting environments or the consumption of the sample due to preparation procedure could be avoided.

The present inventive subject matter provides a system for detecting biological particles adapted to detect and collect target biological particles, including a dilution apparatus and a selectively capturing apparatus. The dilution apparatus includes a microfluidic channel, a sample tray assembly, and a first optical detection module, wherein the microfluidic channel has a first end and a second end. The first end of the microfluidic channel is connected to a sample reservoir, and the sample reservoir provides a sample including the target biological particles. The first optical detection module provides a first optical pathway. The first optical pathway passes through the microfluidic channel and is adapted to detect the target biological particles. The sample tray assembly includes at least one sample tray for receiving a sample with the target biological particles that is detected. The selectively capturing apparatus includes a second optical detection module and a capturing device. The sample tray is controlled to move to the selectively capturing apparatus and locate at a position where the second optical detection module corresponds to the sample tray. The second optical detection module locates the accurate position of each of the target biological particles on the sample tray. The capturing device is connected to the second optical detection module by a signal. After the second optical detection module locates the accurate position of each of the target biological particles on the sample tray, the capturing device is controlled to move to the accurate position of each of the target biological particle and to capture the target biological particle. Then, the capturing device is controlled to load the target biological particle that is captured to a collection plate.

The present inventive subject matter further provides a method for detecting biological particles adapted to detect and collect target biological particles, including the following steps.

Step S1: Provide a dilution apparatus, wherein the dilution apparatus includes a microfluidic channel, a sample tray assembly, and a first optical detection module. The microfluidic channel has a first end and a second end, wherein the first end of the microfluidic channel is connected to a sample reservoir.

Step S2: Provide a sample that contains the target biological particles by the sample reservoir, wherein the sample tray assembly includes at least one sample tray for receiving a sample discharged through the second end of the microfluidic channel. The first optical detection module provides a first optical pathway that penetrates through the microfluidic channel and is adapted to detect the target biological particles that passing through the microfluidic channel.

Step S3: When the first optical detection module detects any of the target biological particles passing through the microfluidic channel, control the sample tray assembly to provide at least one sample tray. After a sample with the target biological particles passes through the microfluidic channel and the second end of the microfluidic channel, the target biological particles is loaded to the sample tray.

Step S4: Provide a selectively capturing apparatus, wherein the selectively capturing apparatus includes a second optical detection module and a capturing device. The sample tray is controlled to move to the selectively capturing apparatus and locate at a position where the second optical detection module corresponds to the sample tray. The second optical detection module is adapted to scan, recognize, and locate an accurate position of each of the target biological particles on the sample tray. The capturing device is connected to the second optical detection module by a signal.

Step S5: After the second optical detection module locates the accurate position of each of the target biological particles on the sample tray, control the capturing device to move to the accurate position of each of the target biological particle and to capture the target biological particle. Then, the capturing device is controlled to load the target biological particle that is captured to a collection plate.

With such design, by utilizing the system for detecting the biological particles which has the dilution apparatus and the selectively capturing apparatus, the target biological particles could be quickly and precisely captured. Besides, the sample do not have to be transferred into different detecting environments, thereby avoiding the possibility of being deteriorated or contaminated. By using the method for detecting the biological particles, the primary detection could be performed to separate a portion of the sample that probably has rare target biological particles to reduce the volume, the weight, and the composition of the sample that is subjected to precisely detection. Then, by a means of precisely detection to locate, recognize, and capture the target biological particles in the separated sample. The entire detection procedure is performed in the same detecting system, so that the deterioration and the contamination of the sample during change detecting environments and the consumption of sample during preparation procedure could be avoided, thereby facilitating the reliability and the stability of the microdetection.

### BRIEF DESCRIPTION OF THE SEVERAL VIEWS OF THE DRAWINGS

FIG. 1 is a schematic view of the system for detecting biological particles of an embodiment according to the present invention;
FIG. 2 is a flowchart of the method for detecting biological particles of an embodiment according to the present invention;
FIG. 3A and FIG. 3B are schematic views, showing the configuration of the first light source and the first optical detector in the first optical detection module of an embodiment according to the present invention; and
FIG. 4 is a schematic view, showing the configuration of the microfluidic channel and the specimen tray, and the embodiment according to the present invention.

### DETAILED DESCRIPTION OF THE INVENTION

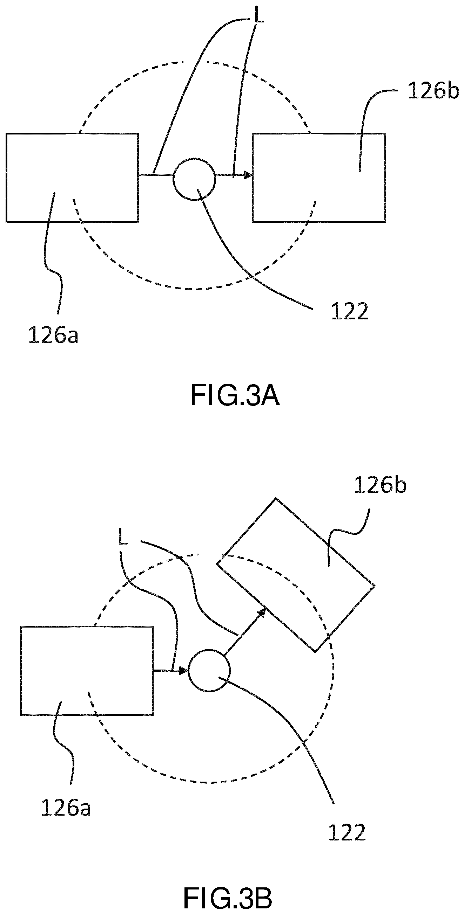

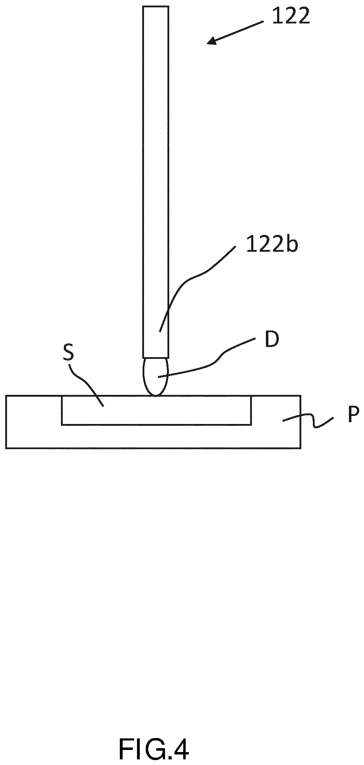

The present invention will be best understood by referring to the following detailed description of some illustrative embodiments in conjunction with the accompanying drawings. Referring to FIG. 1, FIG. 3A, FIG. 3B, and FIG. 4, FIG. 1 is a schematic view of the system for detecting biological particles of an embodiment according to the present invention; FIG. 3 is a schematic view, showing the configuration of the first light source and the first optical detector in the first optical detection module of an embodiment according to the present invention; FIG. 4 is a schematic view, showing the configuration of the microfluidic channel and the specimen tray, and the embodiment according to the present invention.

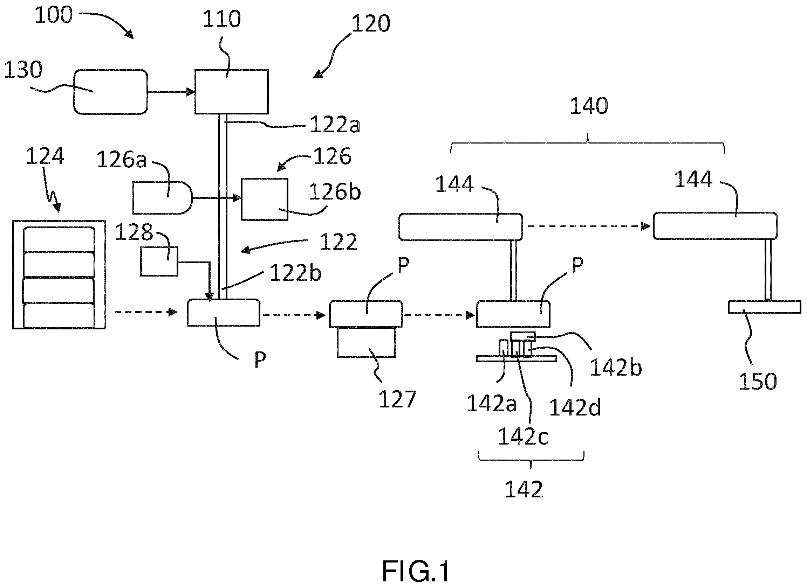

As illustrated in FIG. 1, FIG. 3A, FIG. 3B, and FIG. 4, a system 100 for detecting biological particles of an embodiment according to the present invention is adapted to detect and collect target biological particles and includes a dilution apparatus 120 and a selectively capturing apparatus 140.

The dilution apparatus 120 includes a microfluidic channel 122, a sample tray assembly 124, and a first optical detection module 126. The microfluidic channel 122 has a first end 122a and a second end 122b. The first end 122a of the microfluidic channel 122 is connected to a sample reservoir 110, wherein the sample reservoir 110 is adapted to provide a sample including the target biological particles.

The sample tray assembly 124 includes at least one sample tray P. The first optical detection module 126 provides a first optical pathway L, wherein the first optical pathway L passes through the microfluidic channel 122 and is adapted to detect the target biological particles.

When the first optical detection module 126 detects at least one of the target biological particles passing through the microfluidic channel 122, the sample tray assembly 124 is controlled to provide the sample tray P to allow the at least one of the target biological particles to be received in the sample tray P after the at least one of the target biological particles pass through the second end 122b of the microfluidic channel 122. More specifically, a sample loading apparatus 130 is adapted to controllably regulate the sample in the sample reservoir 110 to load into the first end 122a of the microfluidic channel 122, wherein a volume and a start-stop of the sample flowing into the microfluidic channel 122 is regulated by the sample loading apparatus 130. Therefore, when the first optical detection module 126 detects the target biological particles in a sample flow that flowing through the microfluidic channel 122, the sample loading apparatus 130 regulates the sample flow to stop or to slow down. After the sample tray assembly 124 is controlled to provide and move the sample tray P to an opening of the second end 122b of the microfluidic channel 122, the sample loading apparatus 130 regulates the sample flow to restart or continue to flow in the microfluidic channel 122, thereby allowing the target biological particles to be outputted through the second end 122b of the microfluidic channel 122 and be received in the sample tray P.

The selectively capturing apparatus 140 includes a second optical detection module 142 and a capturing device 144. The sample tray P is controlled to move to the selectively capturing apparatus 140 and locate at a position where the second optical detection module 142 corresponds to the sample tray P.

The second optical detection module 142 is adapted to scan, recognize, identify, and locate an accurate position of each of the target biological particles on the sample tray P. The capturing device 144 is connected to the second optical detection module 142 by a signal. After the second optical detection module 142 locates the accurate position of each of the target biological particles on the sample tray P, the capturing device 144 is controlled to move to a position corresponding to the accurate position of each of the target biological particle and to capture the target biological particle. Then, the capturing device 144 is controlled to load the target biological particle that is captured to a collection plate 150.

A material of the sample tray P could be selected by a user on the required demand, wherein the material of the sample tray P includes, but not limited to, glass and plastic. A bottom portion of the sample tray P could be made of a transparent material, so that a light could penetrate through the bottom portion of the sample tray P from a surface of the bottom portion that is opposite to a surface that contacts with a sample in the sample tray P. As a result, the target biological particles in the sample tray P is exposed to the light, so that a light emitted by the target biological particles could penetrate through the sample tray P. In other embodiments, the material of the sample tray could be opaque, so that a light directly illuminates the target biological particles in the sample tray P from a side of the sample tray P that contains the sample.

In the current embodiment, the sample loading apparatus 130 could regulate to load a predetermined amount of the sample in the sample reservoir 110 into the microfluidic channel 122 through the first end 122a of the microfluidic channel 122 continually or at the interval. Thus, a speed of the sample flow and the sample flow in the microfluidic channel 122 are regulated by the sample loading apparatus 130. The sample in the sample reservoir 110 flows into the microfluidic channel 122 through the first end 122a of the microfluidic channel 122 and flows out through the second end 122b of the microfluidic channel 122. A waste liquid tank (not shown) is provided for receiving the sample that is discharged from the second end 122b of the microfluidic channel 122. When the sample flows through the microfluidic channel 122, the first optical detection module 126 detects the sample flow in the microfluidic channel 122. When the first optical detection module 126 detects the target biological particles in the sample flow, the sample loading apparatus 130 regulates the sample reservoir 110 to stop loading the sample into the microfluidic channel 122, and the sample tray assembly 124 provides a new sample tray P to be located below the second end 122b of the microfluidic channel 122. After that, the sample loading apparatus 130 is controllably regulate the sample reservoir 110 to load the sample again, so that a sample containing the target biological particles could be discharged into the new sample tray P. A total volume of the sample that is discharged into the new sample tray P is in a range of 1 to 100 µL. The total volume of the sample that is discharged into the new sample tray P is adjustable according to the necessity of an operator. Next, the sample tray P that contains the target biological particles is moved to the selectively capturing apparatus 140, and the selectively capturing apparatus 140 performs a selectively capturing process to draw the target biological particles on the sample tray P. At this time, the first optical detection module 126 continuously detects the sample flows in the microfluidic channel 122 until other target biological particles are detected in the sample flow of the microfluidic channel 122 again. When other target biological particles are detected, the abovementioned steps are conducted again. Namely, the sample tray assembly 124 provides a new sample tray P for receiving the sample with the target biological particles, and the sample tray P containing the target biological particles is moved to the selectively capturing apparatus 140.

As illustrated in FIG. 1, FIG. 3A, and FIG. 3B, the first optical detection module 126 includes a first light source 126a and a first optical detector 126b. The first light source 126a and the first optical detector 126b are disposed at two planes that are not parallel to the microfluidic channel 122, respectively, thereby allowing the first optical pathway L to pass through the microfluidic channel 122. In an embodiment, a fluorescent particle that combined with the target biological particle is illuminated by laser light to emit a fluorescent light in all radial directions. Thus, the first optical detector 126b and the first light source 126a are disposed at the same plane which is not parallel to the microfluidic channel 122. In the current embodiment, the first optical detector 126b includes, but is not limited to, a charge-coupled device (CCD), a photomultiplier (PMT), a high-speed charge-coupled device (High-speed CCD), a complementary metal-oxide-semiconductor (CMOS), a scientific complementary metal-oxide-semiconductor (sCMOS), and combination thereof.

The first light source 126a emits an excitation light to the first optical detector 126b, and a pathway of the excitation light is defined as the first optical pathway L. The first optical pathway L passes through the microfluidic channel 122 and is adapted to detect the target biological particles. In the current embodiment, when the target biological particles absorb the excitation light emitted by the first light source 126a, the target biological particle is activated to emit an emission light, wherein the emission light could be a fluorescent light or luminescence.

The first light source 126a could be a laser, a mercury lamp, and a light-emitting diode (LED). The excitation light that is emitted by the first light source 126a could be visible light or invisible light.

In the current embodiment, a label that is connected to one or more of the target biological particles is adapted to absorb the excitation light emitted by the first light source 126a to emit an emission light, wherein the emission light could be a fluorescent light or luminescence. The label is a molecular enabling to specifically bind to the target biological particles. The label is selected from a group including, but is not limited to, an anti-EpCAM antibody, an anti-CD45 antibody, an anti-Nucleus antibody, and an aptamer. The label is bound with a substance that could be excited by light. In the current embodiment, the label is an anti-EpCAM antibody that is bound with a fluorescent group. The label could attach to a specific substance of the biological particles, wherein the specific substance includes, but is not limited to, the deoxyribonucleic acid (DNA), ribonucleic acid (RNA), nuclear proteins, cytoplasm proteins, membrane proteins, and/or membrane glycoproteins. In the current embodiment, after the first light source 126a emits a laser light beam in a wavelength range between 350 nm and 700 nm (which is called A light hereinafter), labels that attached to circulating tumor cells (CTC) are excited. The label is specific for an EpCAM protein, so that the label could attach to at least one of the EpCAM proteins on surface of the circulating tumor cell (CTC). Additionally, the label includes Alexa Fluor, Fluor 488 or PE fluorescent particle. After the label is illuminated by the laser light beam, the label is activated to emit an emission light in a wavelength range between 400 nm and 800 nm (which is called B light hereinafter). An optical filter is disposed at a front end of the first optical detector 126b, so that light that could be received by the first optical detector 126b includes the A light and the B light that could penetrate through the optical filter. The optical filter is adjustable on required demand. In other embodiments, the optical filter could merely allow light within the wavelength of the emission light to penetrate and block other light. Thus, merely the B light could enter the first optical detector 126b. In an embodiment, the first optical detector 126b is a photomultiplier (PMT). After the photomultiplier PMT (126b) senses the B light, the first optical detection module 126 determines that at least one of the target biological particles is detected.

As illustrated in FIG. 1 and FIG. 4, the dilution apparatus 120 includes a diluter supplying device 128, wherein the diluter supplying device 128 is adapted to add a diluter S into the sample tray P. When at least one of the target biological particles is detected by the first optical detection module 126, the sample loading apparatus 130 regulates the sample reservoir 110 to stop loading the sample into the microfluidic channel 122, thereby stopping the sample being discharged through the second end 122b of the microfluidic channel 122. Then, the sample tray assembly 124 moves the sample tray P that contains the diluter S to a position below the second end 122b of the microfluidic channel 122. After that, the sample loading apparatus 130 regulates the sample reservoir 110 to load the sample, thereby discharging the sample containing the target biological particles to the sample tray P.

In the current embodiment, the second end 122b of the microfluidic channel 122 is distant but near to a liquid level of the diluter S in the sample tray P. A distance between the second end 122b of the microfluidic channel 122 and the liquid level of the diluter S in the sample tray P allow the sample droplet D discharged through the second end 122b of the microfluidic channel 122 to touch a liquid surface of the diluter S. Due to surface tension of the diluter S and the sample droplet D, the sample droplet D discharged through the second end 122b of the microfluidic channel 122 could smoothly drip into the diluter S. The design could avoid the surface tension of the sample droplet D to offset the gravity of the sample droplet D, leading to a problem that the sample droplet D is retained to an edge of the second end 122b of the microfluidic channel 122 and does not drip into the sample tray P. In an embodiment, a distance between the second end 122b of the microfluidic channel 122 and a bottom surface of a slot on the sample tray P for containing the diluter S is in a range of 1 to 20 mm. A height of the diluter S in the sample tray P is in a range of 0.5 to 10 mm. The distance between the second end 122b of the microfluidic channel 122 and the liquid level of the diluter S in the sample tray P is in a range of 0.5 to 19.5 mm. With such design, the sample droplet D is avoided to be retained on the edge of the second end 122b of the microfluidic channel 122. Besides, by avoiding to drip the sample droplet D from a height to the sample tray P, an impact on the biological particles in the sample tray P could be reduced

In an experiment of the present invention, the sample is dripped into the sample tray P at a flow rate is 0.7 mL/min, and the sample contains cell lines. The experiment has three groups, namely a blank group, an experimental group, and a control group. In the blank group, the sample is not treated by any pre-preparation process. In the experimental group, the sample droplet D drips to the sample tray P containing the diluter S. In the control group, the sample is directly dripped to the sample tray P that does not contain the diluter S. After dripping 0.7 ml of sample into the sample tray P of each of the three groups, the cell viability of the cell line in the sample is measured by using the Cell Counting Kit 8 (CCK8) to analyze whether there is any significant difference(s) that exists among the three groups. As a result, comparing the blank group with the experimental group, there is no significant difference (P-value is 0.03). Comparing the experimental group with the control group, there is a significant difference (P-value is 0.12). Therefore, it is learned that dripping the sample directly to the sample tray P that does not contain the diluter S will affects the cells (biological particles) in the sample. Additionally, when the sample is directly dripped to the sample tray P that does not contain the diluter S, a solution for preserving the biological particles probably evaporates during operation due to a long operating time, leading to the death of the biological particles. On the contrary, when the diluter S is provided in the sample tray P, the abovementioned problems could be solved. In the embodiment, the sample tray P that contains the diluter S and the sample droplet D is shaken by a mixing device 127, so that the biological particles could be distributed evenly in the diluter S, thereby evenly scattering the biological particles in the sample droplet D. Thus, the target biological particles and other biological particles are evenly distributed. The mixing device 127 is used for distributing the target biological particles and other biological particles evenly, so that the density of the biological particle of the diluter S in the sample tray P is even, thereby facilitating detecting, recognizing the target biological particles among other biological particles and avoiding capturing the biological particles other than the target biological particles.

The second optical detection module 142 includes a second light source 142a, a lens assembly 142b, a second photomultiplier 142c, and a charge-coupled device 142d. In the current embodiment, when the target biological particles absorb the excitation light emitted by the second light source 142a, an emission light is emitted by the target biological particles, wherein the emission light could be a fluorescent light or luminescence. After the second light source 142a emits the excitation light, the excitation light passes the sample tray P and the lens assembly 142b to the second photomultiplier 142c. Thus, a pathway of the excitation light is defined as a second optical pathway. After the second light source 142a emits the excitation light, the excitation light passes the sample tray P and the lens assembly 142b to the charge-coupled device 142d. Thus, a pathway of the excitation light is defined as a third optical pathway. In the embodiment, in the second optical pathway, the lights passing through the lens assembly 142b include the excitation light emitted by the second light source 142a and the emission light. In another embodiment, in the third optical pathway, the lights passing through the lens assembly 142b include the excitation light emitted by the second light source 142a and the emission light. In the current embodiment, the emission light enters the second photomultiplier 142c along the second optical pathway, so that the second photomultiplier 142c receives the emission light and records the intensity of the emission light of the target biological particles. The emission light enters the charge-coupled device 142d along the third optical pathway, so that the charge-coupled device 142d receives the emission light and captures an image of the target biological particles that emit the emission light.

In the current embodiment, the label bound to the target biological particles absorbs the excitation light from the second light source 142a, an emission light is emitted by each of the labels attached to the target biological particles, wherein the emission light could be a fluorescent light or luminescence. The label could be a molecule that is specific for the biological particles, wherein the label includes, but is not limited to, an anti-EpCAM antibody, an anti-CD45 antibody, an anti-Nucleus antibody, and an aptamer. Besides, the label is bound with a substance that could be excited by light. In the current embodiment, the label is an anti-EpCAM antibody that is bound with the fluorescent group. The label could attach to a specific substance of the biological particles, wherein the specific substance includes, but is not limited to, the deoxyribonucleic acid (DNA), ribonucleic acid (RNA), nuclear proteins, cytoplasm proteins, membrane proteins, and/or membrane glycoproteins. In the current embodiment, after the second light source 142a emits a laser light beam in a wavelength range between 350 nm and 700 nm (which is called C light hereinafter), labels that are attached to circulating tumor cells (CTC) are excited. The label is specific for an EpCAM protein, so that the label could attach to at least one of the EpCAM proteins on the surface of the circulating tumor cell (CTC). Additionally, the label includes Alexa Fluor, Fluor 488, or PE fluorescent particle. After the label is illuminated by the laser light beam, the label is activated to emit an emission light in a wavelength range between 400 nm and 800 nm (which is called D light hereinafter). Simultaneously, the C light and the D light enter into the lens assembly 142b. However, the lens assembly 142b includes an optical filter, so that merely the D light could enter into the second photomultiplier (PMT) 142c or the charge-coupled device (CCD) 142d. In another embodiment, a second lens assembly (not shown) is connected to the second light source 142a, wherein the excitation light emitted by the second light source 142a enters the second lens assembly. After the second light source 142a emits the excitation light, the excitation light passes through the second lens assembly, the sample tray P, and the lens assembly 142b to the second photomultiplier 142c. Thus, a pathway of the excitation light is defined as the second optical pathway. After the second light source 142a emits the excitation light, the excitation light passes through the second lens assembly, the sample tray P, and the lens assembly 142b to the charge-coupled device 142d. Thus, a pathway of the excitation light is defined as the third optical pathway. The second lens assembly includes an optical filter for allowing the light having a wavelength within a predetermined range to penetrate through. The optical filter is adjustable on required demand to optimize the detecting efficiency. More specifically, a configuration of lens of the lens assembly 142b and the second lens assembly and a magnification of the lens is adjustable on required demand. In an embodiment, the second lens assembly connected to the second light source 142a, the lens assembly 142b connected to the second photomultiplier 142c, and the lens assembly 142b connected to the charge-coupled device 142d could be the same.

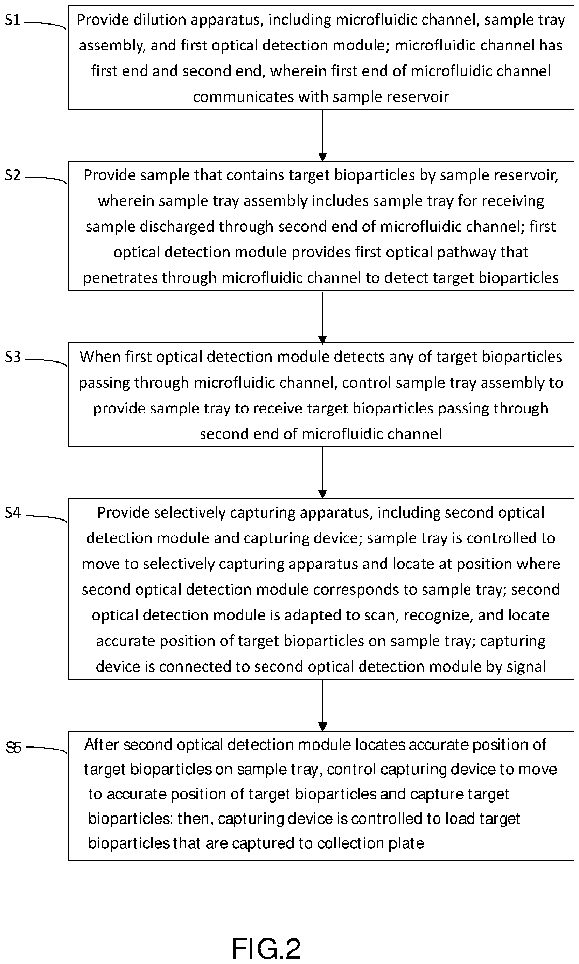

Referring to FIG. 1 and FIG. 2, FIG. 2 is a flowchart of a method for detecting biological particles of an embodiment according to the present invention. The method for detecting biological particles, which is adapted to detect and collect target biological particles includes at least the following steps:
**Step S1:** A dilution apparatus 120 is provided, wherein the dilution apparatus 120 includes a microfluidic channel 122, a sample tray assembly 124, and a first optical detection module 126. The microfluidic channel 122 has a first end 122a and a second end 122b, wherein the first end 122a of the microfluidic channel 122 is connected to a sample reservoir 110.
**Step S2:** The sample reservoir 110 provides a sample that has target biological particles. The sample tray assembly 124 includes at least one sample tray P. The first optical detection module 126 provides a first optical pathway L, which is a pathway of light. After the first light source 126a emits light, the light penetrates through the microfluidic channel 122 to reach the first optical detector 126b and is adapted to detect at least one of the target biological particles that passes through the microfluidic channel 122.
**Step S3:** When the first optical detection module 126 detects any of the target biological particles passing through the microfluidic channel 122, the sample tray assembly 124 is controlled to provide a sample tray P. After the target biological particles pass through the microfluidic channel 122 and output through the second end 122b of the microfluidic channel 122, the target biological particles are loaded to the sample tray P.
**Step S4:** A selectively capturing apparatus 140 is provided, wherein the selectively capturing apparatus 140 includes a second optical detection module 142 and a capturing device 144. The sample tray P is controlled to move to the selectively capturing apparatus 140 and locate at a position where the second optical detection module 142 corresponds to the sample tray P. The second optical detection module 142 is adapted to scan, recognize, and locate an accurate position of each of the target biological particles on the sample tray P. The capturing device 144 is connected to the second optical detection module 142 by a signal.
**Step S5:** After the second optical detection module 142 locates the accurate position of each of the target biological particles on the sample tray P, the capturing device 144 is controlled to move to the accurate position of each of the target biological particles and to capture the target biological particle. Then, the capturing device 144 is controlled to load the target biological particle that is captured to a collection plate 150.

The first optical detection module 126 includes a first light source 126a and a first optical detector 126b, wherein the first light source 126a and the first optical detector 126b are disposed at two planes that are not parallel to the microfluidic channel 122, respectively, thereby allowing the first optical pathway L to pass through the microfluidic channel 122.

The dilution apparatus 120 includes a diluter supplying device 128. After the diluter supplying device 128 adds a diluter S into the sample tray P, the sample tray P could receive the target biological particles discharged through the second end 122b of the microfluidic channel 122. In the current embodiment, after the sample with the target biological particles is added to the diluter S in the sample tray P, a mixing device 127 makes the target biological particles evenly distributed in the diluter S.

The second optical detection module 142 includes a second light source 142a, a lens assembly 142b, a second photomultiplier 142c, and a charge-coupled device 142d. The second light source 142a generates a second optical pathway and a third optical pathway. The second optical pathway is started from the second light source 142a and passes through the sample tray P and the lens assembly 142b to the second photomultiplier 142c. The third optical pathway is started from the second light source 142a and passes through the sample tray P and the lens assembly 142b to the charge-coupled device 142d. In the current embodiment, when the target biological particles absorb the excitation light emitted by the second light source 142a, the target biological particles emit an emission light, wherein the emission light could be a fluorescent light or luminescence. The emission light enters the second photomultiplier 142c along the second optical pathway. After the second photomultiplier 142c receives the emission light, the second photomultiplier 142c records the intensity of the emission light of the target biological particles. The emission light enters the charge-coupled device 142d along the third optical pathway. After the charge-coupled device 142d receives the emission light, the charge-coupled device 142d captures an image of the target biological particles that emit the emission light.

In the above-mentioned embodiment, by utilizing the system for detecting biological particles having the dilution apparatus and the selectively capturing apparatus, the target biological particles in the sample could be quickly and accurately captured, and the problem of deterioration and contamination of the sample during the manual pre-processing operation could be avoided. The dilution apparatus could quickly and primarily determine whether the sample probably includes the target biological particles and exclude the sample that does not have the target biological particles. Next, the sample that probably has the target biological particles is detected by the selectively capturing apparatus to locate, recognize, and capture the target biological particles. The entire procedure is performed in the same detecting system, so that the deterioration and contamination of the sample during the manual pre-processing operation could be avoided, thereby enhancing the reliability and stability of the microdetection.

It must be pointed out that the embodiment described above is only a preferred embodiment of the present invention. The scope of the invention is defined by the appended claims.

### Element Number

### [Present Invention]

100: system for detecting biological particles
110: sample reservoir
120: dilution apparatus
122: microfluidic channel
122a: first end
122b: second end
124: sample tray assembly
126: first optical detection module
126a: first light source
126b: first optical detector
127: mixing device
128: diluter supplying device
130: sample loading apparatus
140: selectively capturing apparatus
142: second optical detection module
142a: second light source
142b: lens assembly
142c: second photomultiplier
142d: charge-coupled device
144: capturing device
150: collection plate
D: sample droplet
L: first optical pathway
P: sample tray
S: diluter

## Claims

1. A system (100) for detecting biological particles adapted to detect and collect target biological particles, comprising:
a dilution apparatus (120) comprising a microfluidic channel (122), a sample tray assembly (124), and a first optical detection module (126), wherein the microfluidic channel (122) has a first end (122a) and a second end (122b); the first end (122a) of the microfluidic channel (122) is connected to a sample reservoir (110), and the sample reservoir (110) provides a sample comprising the target biological particles; the first optical detection module (126) provides a first optical pathway (L); the first optical pathway (L) passes through the microfluidic channel (122) and is adapted to detect the target biological particles; the sample tray assembly (124) comprises at least one sample tray (P) for receiving a sample with the target biological particles that is detected;
a selectively capturing apparatus (140) comprising a second optical detection module (142) and a capturing device (144); the sample tray (P) is controlled to move to the selectively capturing apparatus (140) and locate at a position where the second optical detection module (142) corresponds to the sample tray (P); the second optical detection module (142) locates the accurate position of each of the target biological particles on the sample tray; the capturing device (144) is connected to the second optical detection module (142) by a signal; after the second optical detection module (142) locates the accurate position of each of the target biological particles on the sample tray (P), the capturing device is controlled to move to the accurate position of each of the target biological particle and to capture the target biological particle; then, the capturing device (144) is controlled to load the target biological particle that is captured to a collection plate (150).

2. The system for detecting biological particles as claimed in claim 1, wherein the first optical detection module (126) comprises a first light source (126a) and a first optical detector (126b); the first light source (126a) and the first optical detector (126b) are disposed at two planes that are not parallel to the microfluidic channel (122), respectively, so that the first optical pathway (L) passes through the microfluidic channel (122).

3. The system for detecting biological particles as claimed in claim 1, wherein the dilution apparatus (120) comprises a diluter supplying device (128), wherein the diluter supplying device (128) adds a diluter (S) into the sample tray (P), and then the sample with the target biological particles is discharged through the second end (122b) of the microfluidic channel (122) and is received by the sample tray (P).

4. The system for detecting biological particles as claimed in claim 3, wherein a mixing device (127) makes the target biological particles be distributed evenly in the diluter (S) in the sample tray (P).

5. The system for detecting biological particles as claimed in claim 1, wherein the second optical detection module (142) comprises a second light source (142a), a lens assembly (142b), a photomultiplier (142c), and a charge-coupled device (142d); the second light source (142a) generates a second optical pathway and a third optical pathway; the second optical pathway is started from the second light source (142a) and passes through the sample tray (P) and the lens assembly (142b) to the photomultiplier (142c); the third optical pathway is started from the second light source (142a) and passes through the sample tray (P) and the lens assembly (142b) to the charge-coupled device (142d).

6. The system for detecting biological particles as claimed in claim 5, wherein when the target biological particles absorb the excitation light emitted by the second light source (142a), the target biological particles emit an emission light; the emission light enters the charge-coupled device (142d) along the third optical pathway; the charge-coupled device (142d) receives the emission light and captures an image of the target biological particles that emit the emission light.

7. A method for detecting biological particles adapted to detect and collect target biological particles, comprising:
providing a dilution apparatus (120), wherein the dilution apparatus (120) comprises a microfluidic channel (122), a sample tray assembly (124), and a first optical detection module (126); the microfluidic channel (122) has a first end (122a) and a second end (122b), wherein the first end (122a) of the microfluidic channel (122) is connected to a sample reservoir (110);
providing a sample that contains the target biological particles by the sample reservoir (110), wherein the sample tray assembly (124) comprises at least one sample tray (P) for receiving a sample discharged through the second end (122b) of the microfluidic channel (122); the first optical detection module (126) provides a first optical pathway (L) that penetrates through the microfluidic channel (122) and is adapted to detect at least one of the target biological particles that passes through the microfluidic channel (122);
when the first optical detection module (126) detects any of the target biological particles passing through the microfluidic channel (122), controlling the sample tray assembly (124) to provide at least one sample tray (P); after a sample with the target biological particles passes through the microfluidic channel (122) and the second end (122b) of the microfluidic channel (122), the target biological particles is loaded to the sample tray (P);
providing a selectively capturing apparatus (140), wherein the selectively capturing apparatus (140) comprises a second optical detection module (142) and a capturing device (144); the sample tray (P) is controlled to move to the selectively capturing apparatus (140) and locate at a position where the second optical detection module (142) corresponds to the sample tray (P); the second optical detection module (142) is adapted to scan, identify, and locate an accurate position of each of the target biological particles on the sample tray (P); the capturing device (144) is connected to the second optical detection module (142) by a signal;
after the second optical detection module (142) locates the accurate position of each of the target biological particles on the sample tray (P), controlling the capturing device (144) to move to the accurate position of each of the target biological particle and capture the target biological particle; then, the capturing device (144) is controlled to load the target biological particle that is captured to a collection plate (150).

8. The method for detecting biological particles as claimed in claim 7, wherein the first optical detection module (126) comprises a first light source (126a) and a first optical detector (126b); the first light source (126a) and the first optical detector (126b) are disposed at two planes that are not parallel to the microfluidic channel (122), respectively, so that the first optical pathway (L) passes through the microfluidic channel (122).

9. The method for detecting biological particles as claimed in claim 7, wherein the dilution apparatus (120) comprises a diluter supplying device (128), wherein the diluter supplying device (128) adds a diluter (S) into the sample tray (P), and then the sample with the target biological particles is discharged through the second end (122b) of the microfluidic channel (122) and is received by the sample tray (P).

10. The method for detecting biological particles as claimed in claim 9, wherein a mixing device (127) makes the target biological particles be distributed evenly in the diluter (S) in the sample tray (P).

11. The method for detecting biological particles as claimed in claim 7, wherein the second optical detection module (142) comprises a second light source (142a), a lens assembly (142b), a photomultiplier (142c), and a charge-coupled device (142d); the second light source (142a) generates a second optical pathway and a third optical pathway; the second optical pathway is started from the second light source (142a) and passes through the sample tray (P) and the lens assembly (142b) to the photomultiplier (142c); the third optical pathway is started from the second light source (142a) and passes through the sample tray (P) and the lens assembly (142b) to the charge-coupled device (142d).

12. The method for detecting biological particles as claimed in claim 11, wherein when the target biological particles absorb the excitation light emitted by the second light source (142a), the target biological particles emit an emission light; the emission light enters the charge-coupled device (142d) along the third optical pathway; the charge-coupled device (142d) receives the emission light and captures an image of the target biological particles that emit the emission light.

## Patentansprüche

1. System (100) zum Detektieren biologischer Partikel, das zum Detektieren und Sammeln biologischer Zielpartikel angepasst ist, aufweisend:
eine Verdünnungsvorrichtung (120), die einen Mikrofluidkanal (122), eine Probentellereinrichtung (124) und ein erstes optisches Detektionsmodul (126) aufweist, wobei der Mikrofluidkanal (122) ein erstes Ende (122a) und ein zweites Ende (122b) hat, das erste Ende (122a) des Mikrofluidkanals (122) mit einem Probenreservoir (110) verbunden ist, und das Probenreservoir (110) eine Probe bereitstellt, die die biologischen Zielpartikel aufweist, das erste optische Detektionsmodul (126) einen ersten optischen Pfad (L) bereitstellt, der erste optische Pfad (L) durch den Mikrofluidkanal (122) verläuft und angepasst ist, um die biologischen Zielpartikel zu detektieren, die Probentellereinrichtung (124) mindestens einen Probenteller (P) zum Empfangen einer Probe mit den biologischen Zielpartikeln, die detektiert werden, aufweist,
eine selektiv erfassende Vorrichtung (140), die ein zweites optisches Detektionsmodul (142) und eine Erfassungsvorrichtung (144) aufweist, wobei der Probenteller (P) gesteuert wird, um sich zu der selektiv erfassenden Vorrichtung (140) zu bewegen und sich an einer Position zu befinden, wo das zweite optische Detektionsmodul (142) zu dem Probenteller (P) korrespondiert, wobei das zweite optische Detektionsmodul (142) die genaue Position von jedem der biologischen Zielpartikel auf dem Probenteller lokalisiert, wobei die Erfassungsvorrichtung (144) durch ein Signal mit dem zweiten optischen Detektionsmodul (142) verbunden ist, wobei, nachdem das zweite optische Detektionsmodul (142) die genaue Position von jedem der biologischen Zielpartikel auf dem Probenteller (P) lokalisiert hat, die Erfassungsvorrichtung gesteuert wird, um sich zu der genauen Position jedes der biologischen Zielpartikel zu bewegen und das biologische Zielpartikel zu erfassen, wobei dann die Erfassungsvorrichtung (144) gesteuert wird, um das biologische Zielpartikel, das erfasst wurde, in eine Sammelplatte (150) zu laden.

2. System zum Detektieren biologischer Partikel gemäß Anspruch 1, wobei das erste optische Detektionsmodul (126) eine erste Lichtquelle (126a) und einen ersten optischen Detektor (126b) aufweist, wobei die erste Lichtquelle (126a) und der erste optische Detektor (126b) in zwei Ebenen angeordnet sind, die nicht parallel zu dem Mikrofluidkanal (122) sind, so dass der erste optische Pfad (L) durch den Mikrofluidkanal (122) hindurchgeht.

3. System zum Detektieren biologischer Partikel gemäß Anspruch 1, wobei die Verdünnungsvorrichtung (120) eine Verdünnungsmittel-Zuführvorrichtung (128) aufweist, wobei die Verdünnungsmittel-Zuführvorrichtung (128) ein Verdünnungsmittel (S) in den Probenteller (P) einbringt, und dann die Probe mit den biologischen Zielpartikeln durch das zweite Ende (122b) des Mikrofluidkanals (122) hindurch abgegeben und von dem Probenteller (P) empfangen wird.

4. System zum Detektieren biologischer Partikel gemäß Anspruch 3, wobei eine Mischvorrichtung (127) bewirkt, dass die biologischen Zielpartikel gleichmäßig in dem Verdünnungsmittel (S) in dem Probenteller (P) verteilt werden.

5. System zum Detektieren biologischer Partikel gemäß Anspruch 1, wobei das zweite optische Detektionsmodul (142) eine zweite Lichtquelle (142a), eine Linseneinrichtung (142b), einen Fotovervielfacher (142c) und eine ladungsgekoppelte Vorrichtung (142d) aufweist, die zweite Lichtquelle (142a) einen zweiten optischen Pfad und einen dritten optischen Pfad erzeugt, der zweite optische Pfad von der zweiten Lichtquelle (142a) ausgeht und durch den Probenteller (P) und die Linseneinrichtung (142b) hindurch zu dem Fotovervielfacher (142c) verläuft, der dritte optische Pfad von der zweiten Lichtquelle (142a) ausgeht und durch den Probenteller (P) und die Linseneinrichtung (142b) hindurch zu der ladungsgekoppelten Vorrichtung (142d) verläuft.

6. System zum Detektieren biologischer Partikel gemäß Anspruch 5, wobei, wenn die biologischen Zielpartikel das von der zweiten Lichtquelle (142a) emittierte Anregungslicht absorbieren, die biologischen Zielpartikel ein Emissionslicht emittieren, das Emissionslicht entlang des dritten optischen Pfades in die ladungsgekoppelte Vorrichtung (142d) eintritt, die ladungsgekoppelte Vorrichtung (142d) das Emissionslicht empfängt und ein Bild der biologischen Zielpartikel erfasst, die das Emissionslicht emittieren.

7. Verfahren zum Detektieren biologischer Partikel, das zum Detektieren und zum Sammeln biologischer Zielpartikel angepasst ist, aufweisend:
Bereitstellen einer Verdünnungsvorrichtung (120), wobei die Verdünnungsvorrichtung (120) einen Mikrofluidkanal (122), eine Probentellereinrichtung (124) und ein erstes optisches Detektionsmodul (126) aufweist, wobei der Mikrofluidkanal (122) ein erstes Ende (122a) und ein zweites Ende (122b) hat, wobei das erste Ende (122a) des Mikrofluidkanals (122) mit einem Probenreservoir (110) verbunden ist,
Bereitstellen einer Probe, die die biologischen Zielpartikel enthält, durch das Probenreservoir (110), wobei die Probentellereinrichtung (124) mindestens einen Probenteller (P) zum Empfangen einer durch das zweite Ende (122b) des Mikrofluidkanals (122) hindurch abgegebenen Probe aufweist, das erste optische Detektionsmodul (126) einen ersten optischen Pfad (L) bereitstellt, der durch den Mikrofluidkanal (122) hindurchtritt und angepasst ist, um mindestens eines der biologischen Zielpartikel zu detektieren, das durch den Mikrofluidkanal (122) hindurchgeht,
wenn das erste optische Detektionsmodul (126) irgendeines der biologischen Zielpartikel detektiert, die durch den Mikrofluidkanal (122) hindurchgehen, Steuern der Probentellereinrichtung (124), um mindestens einen Probenteller (P) bereitzustellen, wobei, nachdem eine Probe mit den biologischen Zielpartikeln durch den Mikrofluidkanal (122) und das zweite Ende (122b) des Mikrofluidkanals (122) hindurchgegangen ist, die biologischen Zielpartikel in den Probenteller (P) geladen werden,
Bereitstellen einer selektiv erfassenden Vorrichtung (140), wobei die selektiv erfassende Vorrichtung (140) ein zweites optisches Detektionsmodul (142) und eine Erfassungsvorrichtung (144) aufweist, der Probenteller (P) gesteuert wird, um sich zu der selektiv erfassenden Vorrichtung (140) zu bewegen und sich an einer Position zu befinden, wo das zweite optische Detektionsmodul (142) zu dem Probenteller (P) korrespondiert, wobei das zweite optische Detektionsmodul (142) angepasst ist, um eine genaue Position jedes der biologischen Zielpartikel auf dem Probenteller (P) abzutasten, zu identifizieren und zu lokalisieren, wobei die Erfassungsvorrichtung (144) durch ein Signal mit dem zweiten optischen Detektionsmodul (142) verbunden ist,
nachdem das zweite optische Detektionsmodul (142) die genaue Position jedes der biologischen Zielpartikel auf dem Probenteller (P) lokalisiert hat, Steuern der Erfassungsvorrichtung (144), um sich zu der genauen Position jedes der biologischen Zielpartikel zu bewegen und die biologischen Zielpartikel zu erfassen, wobei dann die Erfassungsvorrichtung (144) gesteuert wird, um die erfassten biologischen Zielpartikel auf eine Sammelplatte (150) zu laden.

8. Verfahren zum Detektieren biologischer Partikel gemäß Anspruch 7, wobei das erste optische Detektionsmodul (126) eine erste Lichtquelle (126a) und einen ersten optischen Detektor (126b) aufweist, wobei die erste Lichtquelle (126a) und der erste optische Detektor (126b) in zwei Ebenen angeordnet sind, die nicht parallel zu dem Mikrofluidkanal (122) sind, so dass der erste optische Pfad (L) durch den Mikrofluidkanal (122) hindurch verläuft.

9. Verfahren zum Detektieren biologischer Partikel gemäß Anspruch 7, wobei die Verdünnungsvorrichtung (120) eine Verdünnungsmittel-Zuführvorrichtung (128) aufweist, wobei die Verdünnungsmittel-Zuführvorrichtung (128) ein Verdünnungsmittel (S) in den Probenteller (P) einbringt, und dann die Probe mit den biologischen Zielpartikeln durch das zweite Ende (122b) des Mikrofluidkanals (122) hindurch abgegeben und von dem Probenteller (P) empfangen wird.

10. Verfahren zum Detektieren biologischer Partikel gemäß Anspruch 9, wobei eine Mischvorrichtung (127) bewirkt, dass die biologischen Zielpartikel gleichmäßig in dem Verdünner (S) in dem Probenteller (P) verteilt werden.

11. Verfahren zum Detektieren biologischer Partikel gemäß Anspruch 7, wobei das zweite optische Detektionsmodul (142) eine zweite Lichtquelle (142a), eine Linseneinrichtung (142b), einen Fotovervielfacher (142c) und eine ladungsgekoppelte Vorrichtung (142d) aufweist, die zweite Lichtquelle (142a) einen zweiten optischen Pfad und einen dritten optischen Pfad erzeugt, der zweite optische Pfad von der zweiten Lichtquelle (142a) ausgeht und durch den Probenteller (P) und die Linseneinrichtung (142b) hindurch zu dem Fotovervielfacher (142c) verläuft, der dritte optische Pfad von der zweiten Lichtquelle (142a) ausgeht und durch den Probenteller (P) und die Linseneinrichtung (142b) hindurch zu der ladungsgekoppelten Vorrichtung (142d) verläuft.

12. Verfahren zum Detektieren biologischer Partikel gemäß Anspruch 11, wobei, wenn die biologischen Zielpartikel das von der zweiten Lichtquelle (142a) emittierte Anregungslicht absorbieren, die biologischen Zielpartikel ein Emissionslicht emittieren, das Emissionslicht entlang des dritten optischen Pfades in die ladungsgekoppelte Vorrichtung (142d) eintritt, die ladungsgekoppelte Vorrichtung (142d) das Emissionslicht empfängt und ein Bild der biologischen Zielpartikel erfasst, die das Emissionslicht emittieren.

## Revendications

1. Système (100) de détection de particules biologiques adapté pour détecter et collecter des particules biologiques cibles, comprenant :
un appareil de dilution (120) comprenant un canal microfluidique (122), un ensemble plateau d'échantillons (124) et un premier module de détection optique (126), dans lequel le canal microfluidique (122) a une première extrémité (122a) et une deuxième extrémité (122b) ; la première extrémité (122a) du canal microfluidique (122) est reliée à un réservoir d'échantillons (110), et le réservoir d'échantillons (110) fournit un échantillon comprenant les particules biologiques cibles ; le premier module de détection optique (126) fournit une première voie optique (L) ; la première voie optique (L) traverse le canal microfluidique (122) et est adaptée pour détecter les particules biologiques cibles ; l'ensemble plateau d'échantillons (124) comprend au moins un plateau d'échantillons (P) pour recevoir un échantillon avec les particules biologiques cibles qui sont détectées ;
un appareil de capture sélective (140) comprenant un deuxième module de détection optique (142) et un dispositif de capture (144) ; le plateau d'échantillons (P) est commandé pour se déplacer vers l'appareil de capture sélective (140) et se situer à une position où le deuxième module de détection optique (142) correspond au plateau d'échantillons (P) ; le deuxième module de détection optique (142) localise la position précise de chacune des particules biologiques cibles sur le plateau d'échantillons ; le dispositif de capture (144) est connecté au deuxième module de détection optique (142) par un signal ; après que le deuxième module de détection optique (142) a localisé la position précise de chaque particule biologique cible sur le plateau d'échantillons (P), le dispositif de capture est commandé pour se déplacer jusqu'à la position précise de chaque particule biologique cible et pour capturer la particule biologique cible ; ensuite, le dispositif de capture (144) est commandé pour charger la particule biologique cible qui a été capturée sur une plaque de collecte (150).

2. Système de détection de particules biologiques selon la revendication 1, dans lequel le premier module de détection optique (126) comprend une première source de lumière (126a) et un premier détecteur optique (126b) ; la première source de lumière (126a) et le premier détecteur optique (126b) sont disposés sur deux plans qui ne sont pas parallèles au canal microfluidique (122), respectivement, de sorte que la première voie optique (L) passe à travers le canal microfluidique (122).

3. Système de détection de particules biologiques selon la revendication 1, dans lequel l'appareil de dilution (120) comprend un dispositif d'alimentation en diluant (128), dans lequel le dispositif d'alimentation en diluant (128) ajoute un diluant (S) dans le plateau d'échantillons (P), puis l'échantillon avec les particules biologiques cibles est déchargé par la deuxième extrémité (122b) du canal microfluidique (122) et est reçu par le plateau d'échantillons (P).

4. Système de détection de particules biologiques selon la revendication 3, dans lequel un dispositif de mélange (127) permet de répartir uniformément les particules biologiques cibles dans le diluant (S) dans le plateau d'échantillons (P).

5. Système de détection de particules biologiques selon la revendication 1, dans lequel le deuxième module de détection optique (142) comprend une deuxième source de lumière (142a), un ensemble de lentilles (142b), un photomultiplicateur (142c) et un dispositif à couplage de charge (142d) ; la deuxième source de lumière (142a) génère une deuxième voie optique et une troisième voie optique ; la deuxième voie optique part de la deuxième source de lumière (142a) et traverse le plateau d'échantillons (P) et l'ensemble de lentilles (142b) jusqu'au photomultiplicateur (142c) ; la troisième voie optique part de la deuxième source de lumière (142a) et traverse le plateau d'échantillons (P) et l'ensemble de lentilles (142b) jusqu'au dispositif à couplage de charge (142d).

6. Système de détection de particules biologiques selon la revendication 5, dans lequel, lorsque les particules biologiques cibles absorbent la lumière d'excitation émise par la deuxième source de lumière (142a), les particules biologiques cibles émettent une lumière d'émission ; la lumière d'émission entre dans le dispositif à couplage de charge (142d) le long de la troisième voie optique ; le dispositif à couplage de charge (142d) reçoit la lumière d'émission et capture une image des particules biologiques cibles qui émettent la lumière d'émission.

7. Procédé de détection de particules biologiques adapté pour détecter et collecter des particules biologiques cibles, comprenant :
fournir un appareil de dilution (120), dans lequel l'appareil de dilution (120) comprend un canal microfluidique (122), un ensemble plateau d'échantillons (124) et un premier module de détection optique (126) ; le canal microfluidique (122) a une première extrémité (122a) et une deuxième extrémité (122b), où la première extrémité (122a) du canal microfluidique (122) est reliée à un réservoir d'échantillons (110) ;
fournir un échantillon contenant les particules biologiques cibles par le réservoir d'échantillons (110), dans lequel l'ensemble plateau d'échantillons (124) comprend au moins un plateau d'échantillons (P) pour recevoir un échantillon déchargé par la deuxième extrémité (122b) du canal microfluidique (122) ; le premier module de détection optique (126) fournit une première voie optique (L) qui pénètre à travers le canal microfluidique (122) et est adaptée pour détecter au moins une des particules biologiques cibles qui passe à travers le canal microfluidique (122) ;
lorsque le premier module de détection optique (126) détecte l'une quelconque des particules biologiques cibles passant par le canal microfluidique (122), commander l'ensemble plateau d'échantillons (124) pour fournir au moins un plateau d'échantillons (P) ; après qu'un échantillon avec les particules biologiques cibles passe par le canal microfluidique (122) et la deuxième extrémité (122b) du canal microfluidique (122), les particules biologiques cibles sont chargées dans le plateau d'échantillons (P) ;
fournir un appareil de capture sélective (140), dans lequel l'appareil de capture sélective (140) comprend un deuxième module de détection optique (142) et un dispositif de capture (144) ; le plateau d'échantillons (P) est commandé pour se déplacer vers l'appareil de capture sélective (140) et se situer à une position où le deuxième module de détection optique (142) correspond au plateau d'échantillons (P) ; le deuxième module de détection optique (142) est adapté pour balayer, identifier et localiser une position précise de chacune des particules biologiques cibles sur le plateau d'échantillons (P) ; le dispositif de capture (144) est connecté au deuxième module de détection optique (142) par un signal ;
après que le deuxième module de détection optique (142) a localisé la position précise de chacun des particules biologiques cibles sur le plateau d'échantillons (P), commander le dispositif de capture (144) pour qu'il se déplace jusqu'à la position précise de chaque particule biologique cible et capture la particule biologique cible ; ensuite, le dispositif de capture (144) est commandé pour charger la particule biologique cible qui a été capturée sur une plaque de collecte (150).

8. Procédé de détection de particules biologiques selon la revendication 7, dans lequel le premier module de détection optique (126) comprend une première source de lumière (126a) et un premier détecteur optique (126b) ; la première source de lumière (126a) et le premier détecteur optique (126b) sont disposés sur deux plans qui ne sont pas parallèles au canal microfluidique (122), respectivement, de sorte que la première voie optique (L) passe à travers le canal microfluidique (122).

9. Procédé de détection de particules biologiques selon la revendication 7, dans lequel l'appareil de dilution (120) comprend un dispositif d'alimentation en diluant (128), dans lequel le dispositif d'alimentation en diluant (128) ajoute un diluant (S) dans le plateau d'échantillons (P), puis l'échantillon avec les particules biologiques cibles est déchargé à travers la deuxième extrémité (122b) du canal microfluidique (122) et est reçu par le plateau d'échantillons (P).

10. Procédé de détection de particules biologiques selon la revendication 9, dans lequel un dispositif de mélange (127) permet de répartir uniformément les particules biologiques cibles dans le diluant (S) dans le plateau d'échantillons (P).

11. Procédé de détection de particules biologiques selon la revendication 7, dans lequel le deuxième module de détection optique (142) comprend une deuxième source de lumière (142a), un ensemble de lentilles (142b), un photomultiplicateur (142c) et un dispositif à couplage de charge (142d) ; la deuxième source de lumière (142a) génère une deuxième voie optique et une troisième voie optique ; la deuxième voie optique part de la deuxième source de lumière (142a) et traverse le plateau d'échantillons (P) et l'ensemble de lentilles (142b) jusqu'au photomultiplicateur (142c) ; la troisième voie optique part de la deuxième source de lumière (142a) et traverse le plateau d'échantillons (P) et l'ensemble de lentilles (142b) jusqu'au dispositif à couplage de charge (142d).

12. Procédé de détection de particules biologiques selon la revendication 11, dans lequel, lorsque les particules biologiques cibles absorbent la lumière d'excitation émise par la deuxième source de lumière (142a), les particules biologiques cibles émettent une lumière d'émission ; la lumière d'émission entre dans le dispositif à couplage de charge (142d) le long de la troisième voie optique ; le dispositif à couplage de charge (142d) reçoit la lumière d'émission et capture une image des particules biologiques cibles qui émettent la lumière d'émission.
